# FASCICULE DE BREVET EUROPEEN

(11) **EP 4 170 145 B1**
(45) Date de publication et mention de la délivrance du brevet: **06.12.2023**
(21) Numéro de dépôt: 22202641.1
(22) Date de dépôt: 20.10.2022
(51) Int. Cl.: F02C 7/14, F02C 7/18, F02C 7/20

(54) **ENSEMBLE DE PROPULSION D'AÉRONEF COMPRENANT UN ÉCHANGEUR THERMIQUE À PLAQUES, DE SECTION LONGITUDINALE HEXAGONALE, POSITIONNÉ DANS UNE BIFURCATION**
FLUGZEUGANTRIEBSANORDNUNG MIT PLATTENWÄRMETAUSCHER, HEXAGONALEM LÄNGSABSCHNITT, DER IN EINER GABELUNG ANGEORDNET IST
AIRCRAFT PROPULSION ASSEMBLY COMPRISING A PLATE HEAT EXCHANGER WITH HEXAGONAL LONGITUDINAL SECTION POSITIONED IN A BIFURCATION

(30) Priorité: 25.10.2021 FR 2111290
(43) Date de publication de la demande: 26.04.2023
(73) Titulaire: AIRBUS OPERATIONS (S.A.S.), 31060 Toulouse (FR)
(72) Inventeur: SOULIE, Adeline, 31060 Toulouse (FR)
(74) Mandataire: Airbus-OPS SAS

(56) Documents cités:
- FR-A1- 2 889 250
- FR-A1- 2 889 298
- US-A- 5 915 469

## Description

La présente demande se rapporte à un ensemble de propulsion d'aéronef comportant un échangeur thermique à plaques, de section longitudinale hexagonale, positionné dans une bifurcation ainsi qu'à un aéronef comprenant ledit ensemble de propulsion d'aéronef.

Selon une configuration, un aéronef 10 comprend plusieurs ensembles de propulsion 12 positionnés sous les ailes 14.

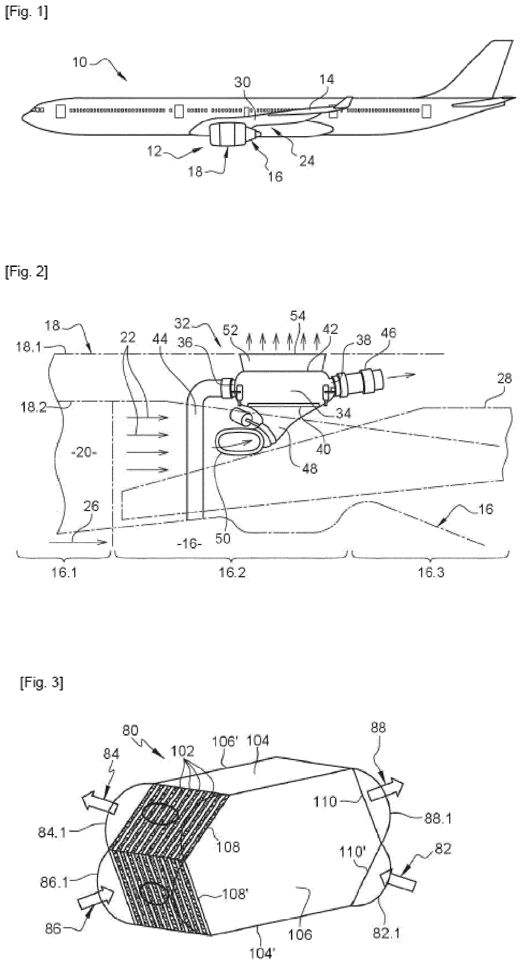

Comme illustré sur les figures 1 et 2, un ensemble de propulsion 12 comprend :
- un moteur 16 dans lequel circule un flux primaire d'air,
- une nacelle 18 positionnée autour du moteur 16 de manière à délimiter avec ce dernier un conduit annulaire 20 dans lequel s'écoule un flux secondaire 22 d'air froid, et
- un mât 24 qui assure la liaison entre le moteur 16 et l'aile 14.

La nacelle 18 comprend une paroi extérieure 18.1 et une paroi intérieure 18.2 délimitant le conduit annulaire 20.

Le moteur 16 comprend, selon le sens d'écoulement du flux primaire matérialisé par la flèche 26, un carter de soufflante 16.1 de grande dimension délimitant un canal annulaire de soufflante, un carter central 16.2 de plus petite dimension renfermant la zone « core » du moteur 16 traversé par le flux primaire, et un carter d'éjection 16.3 de plus grande dimension via lequel est éjecté le flux primaire.

Le mât 24 comprend une structure primaire 28 rigide, qui assure entre autres la transmission des efforts entre le moteur 16 et le reste de l'aéronef 10, et une structure secondaire 30 qui enveloppe la structure primaire 28 et limite la traînée du mât 24.

Comme illustré sur la figure 2, chaque ensemble de propulsion 12 comprend au moins un dispositif d'échange thermique 32 configuré pour refroidir de l'air chaud prélevé au niveau des étages de compression du moteur 16 et destiné aux systèmes de climatisation et de pressurisation de l'aéronef et/ou de dégivrage des ailes 14.

Selon un premier exemple chaque dispositif d'échange thermique 32 comprend :
- un échangeur thermique 34 qui a une forme parallélépipédique et présente un premier circuit d'air chaud reliant une première entrée 36 positionnée sur une première face de l'échangeur thermique 34 et une première sortie 38 positionnée sur une deuxième face parallèle à la première face ainsi qu'un deuxième circuit d'air froid reliant une deuxième entrée 40 positionnée sur une troisième face perpendiculaire aux première et deuxième faces et une deuxième sortie 42 positionnée sur une quatrième face parallèle à la troisième face,
- un conduit d'alimentation en air chaud 44 qui est configuré pour prélever de l'air chaud au niveau du moteur 16, qui traverse la structure primaire 28 du mât et qui est connecté à la première entrée 36,
- un conduit de sortie d'air chaud 46 connecté à la première sortie 38,
- un conduit d'alimentation en air froid 48 connecté à la deuxième entrée 40, débouchant dans le flux secondaire 22 via une écope 50 configurée pour prélever de l'air froid dans le flux secondaire 22,
- un conduit d'échappement 52 connecté à la deuxième sortie 42, qui débouche vers l'extérieur de l'aéronef via une grille 54 prévue au niveau de la structure secondaire 30 du mât et configurée pour rejeter l'air à l'extérieur de l'aéronef.

Selon ce premier exemple, l'échangeur thermique 34 est positionné entre les parois extérieure et intérieure 18.1, 18.2 de la nacelle 18, en dehors du conduit annulaire 20. Les moteurs des aéronefs ayant des diamètres de plus en plus gros et étant positionnés au plus près des ailes 14 pour améliorer les performances aérodynamiques et conserver une garde au sol minimale, la zone située au-dessus de la structure primaire 28 et au-dessous de la structure secondaire 30 du mât est de plus en plus restreinte, ce qui tend à complexifier l'intégration du dispositif d'échange thermique 32.

Selon un autre exemple décrit dans le document FR3077060, l'échangeur thermique est un échangeur coaxial positionné dans la structure primaire du mât. Cette solution permet de libérer l'espace occupé par l'échangeur thermique dans la nacelle entre les parois intérieure et extérieure de la nacelle. Cependant, elle complexifie la zone intérieure de la structure primaire du mât qui est une zone très dense.

Un autre échangeur thermique selon l'état de la technique est montré dans le document FR2889298 A1.

La présente invention vise à remédier à tout ou partie des inconvénients de l'art antérieur.

A cet effet, selon la revendication 1, l'invention a pour objet un ensemble de propulsion d'aéronef comportant un moteur, une nacelle positionnée autour du moteur, un conduit annulaire délimité par le moteur et la nacelle dans laquelle s'écoule un flux secondaire d'air froid, au moins une bifurcation reliant le moteur et la nacelle et comportant un bord d'attaque ainsi qu'une structure primaire d'un mât logé dans la bifurcation et configuré pour relier le moteur à une aile d'aéronef. L'ensemble de propulsion comporte au moins un dispositif d'échange thermique comprenant :
- un échangeur thermique qui présente un premier circuit d'air chaud reliant une première entrée et une première sortie ainsi qu'un deuxième circuit d'air froid reliant une deuxième entrée et une deuxième sortie,
- un conduit d'alimentation en air chaud relié à la première entrée et configuré pour prélever de l'air chaud au niveau du moteur,
- un conduit de sortie d'air chaud relié à la première sortie et configuré pour acheminer de l'air chaud en direction d'au moins un équipement de l'aéronef,
- un conduit d'alimentation en air froid relié à la deuxième entrée et configuré pour prélever de l'air froid dans le flux secondaire,
- un conduit d'échappement relié à la deuxième sortie et configuré pour rejeter l'air à l'extérieur de l'aéronef.

Selon l'invention, l'échangeur thermique est un échangeur à plaques, présentant une section longitudinale hexagonale et positionné dans la bifurcation.

Le fait de prévoir un échangeur thermique avec une section longitudinale hexagonale permet d'obtenir un dispositif d'échange thermique plus compact et de pouvoir le positionner dans la bifurcation.

Selon une autre caractéristique, l'échangeur thermique comprend des plaques positionnées dans des plans longitudinaux verticaux.

Selon une autre caractéristique, le conduit d'alimentation en air froid présente au moins une bouche configurée pour prélever de l'airfroid dans le flux secondaire et positionnée au niveau du bord d'attaque de la bifurcation.

Selon une autre caractéristique, la bouche est positionnée approximativement au milieu du conduit annulaire.

Selon une autre caractéristique, le conduit d'alimentation en air froid comprend des premier et deuxième tronçons, le premier tronçon comportant une première extrémité reliée à la bouche ainsi qu'une deuxième extrémité, le deuxième tronçon comportant une première extrémité reliée à la deuxième entrée de l'échangeur thermique ainsi qu'une deuxième extrémité, les deuxièmes extrémités des premier et deuxième tronçons étant emmanchées l'une dans l'autre et coulissant l'une par rapport à l'autre.

Selon une autre caractéristique, l'échangeur thermique comprend des faces latérales supérieure et inférieure parallèles entre elles, des faces latérales droite et gauche parallèles entre elles et perpendiculaires aux faces latérales supérieure et inférieure, des premières face d'extrémité supérieure et inférieure perpendiculaires aux faces latérales droite et gauche ainsi que des deuxième faces d'extrémité supérieure et inférieure perpendiculaires aux faces latérales droite et gauche ; les première et deuxième faces d'extrémité supérieures étant adjacentes à la face latérale supérieure et positionnées de part et d'autre de ladite face latérale supérieure, les première et deuxième faces d'extrémité inférieures étant adjacentes à la face latérale inférieure et positionnées de part et d'autre de ladite face latérale inférieure. Selon une autre caractéristique, les premières faces d'extrémité supérieure et inférieure forment entre elles un angle compris entre 60 et 150°, les deuxièmes faces d'extrémité supérieure et inférieure formant entre elles un angle compris entre 60 et 150°.

Selon une autre caractéristique, la première entrée est positionnée sur la deuxième face d'extrémité inférieure, la première sortie est positionnée sur la première face d'extrémité supérieure, la deuxième entrée est positionnée sur la première face d'extrémité inférieure et la deuxième sortie est positionnée sur la deuxième face d'extrémité supérieure.

Selon une autre caractéristique, la face latérale inférieure de l'échangeur thermique est plaquée contre la structure primaire.

Selon une autre caractéristique, l'échangeur thermique est un échangeur thermique à contre-courant.

L'invention a également pour objet un aéronef comprenant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une représentation schématique d'un dispositif d'échange thermique illustrant un exemple de l'art antérieur,
- La figure 3 est une vue en perspective d'un échangeur thermique à plaques illustrant un mode de réalisation de l'invention,
- La figure 4 est une représentation schématique d'un dispositif d'échange thermique illustrant un mode de réalisation de l'invention, et
- La figure 5 est une vue de face d'un ensemble de propulsion d'un aéronef illustrant un mode de réalisation de l'invention.

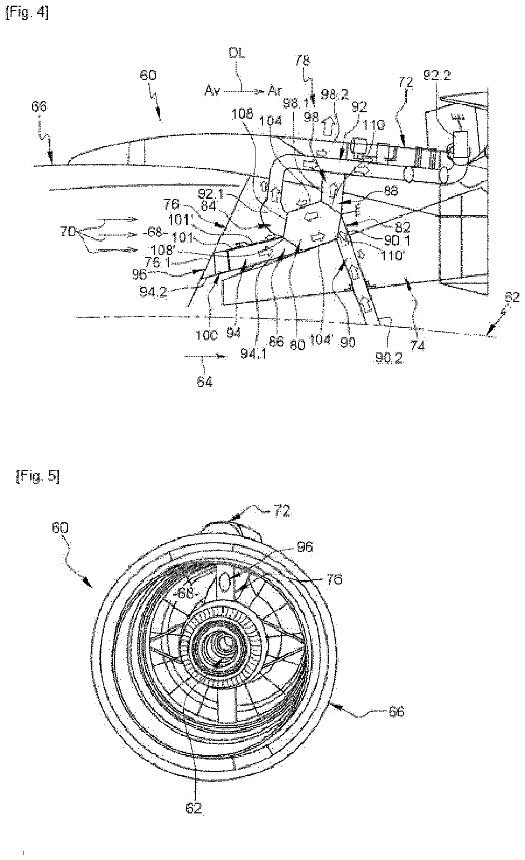

Sur les figures 4 et 5, on a représenté un ensemble de propulsion 60 qui comprend :
- un moteur 62 comportant une zone appelée zone « core » dans le langage aéronautique (ou coeur en français), dans laquelle circule un flux primaire d'air 64,
- une nacelle 66 positionnée autour du moteur 62 de manière à délimiter avec ce dernier un conduit annulaire 68 dans lequel s'écoule un flux secondaire 70 d'air froid, et
- un mât 72 qui assure la liaison entre le moteur 62 et une aile d'un aéronef.

Pour la suite de la description, une direction longitudinale DL est parallèle à l'axe de rotation du moteur 62. Un plan longitudinal contient une direction longitudinale.

Les notions avant/arrière (Av/Ar) font référence au sens d'écoulement du flux d'air secondaire 70 qui s'écoule de l'avant vers l'arrière. Un plan vertical correspond à un plan vertical lorsque l'aéronef est au sol.

Le mât 72 comprend une structure primaire 74 rigide, qui assure entre autres la transmission des efforts entre le moteur 62 et le reste de l'aéronef, et une structure secondaire qui enveloppe la structure primaire 74 à l'extérieur de la nacelle 66 et limite la traînée du mât 72. L'ensemble de propulsion 60 comprend une bifurcation 76 (visible sur la figure 5) traversant le conduit annulaire 68, reliant le moteur 62 et la nacelle 66 dans laquelle est positionnée la structure primaire 74 du mât. Cette bifurcation 76 présente un carénage aérodynamique enveloppant la structure primaire 74 dans le flux secondaire 70 afin de réduire les perturbations du flux secondaire 70.

Chaque bifurcation 76 comprend un bord d'attaque 76.1 qui correspond à la zone de la bifurcation située la plus à l'avant et configurée pour séparer le flux secondaire 70 en deux flux s'écoulant de part et d'autre de la bifurcation 76. Une première bifurcation 76 est positionnée dans un plan sensiblement vertical et au-dessus du moteur 62.

Tous ces éléments de l'ensemble de propulsion ne sont pas plus décrits car ils peuvent être identiques à ceux de l'art antérieur.

Au moins un ensemble de propulsion 60 comprend au moins un dispositif d'échange thermique 78 configuré pour refroidir de l'air chaud prélevé au niveau des étages de compression du moteur 62 et destiné aux systèmes de climatisation et de pressurisation de l'aéronef, de dégivrage de la voilure et/ou à tout autre équipement de l'aéronef.

Selon un premier mode de réalisation, chaque dispositif d'échange thermique 78 comprend :
- un échangeur thermique 80 qui présente un premier circuit d'air chaud reliant une première entrée 82 et une première sortie 84 ainsi qu'un deuxième circuit d'air froid reliant une deuxième entrée 86 et une deuxième sortie 88,
- un conduit d'alimentation en air chaud 90 qui présente une première extrémité 90.1 reliée à la première entrée 82 ainsi qu'une deuxième extrémité 90.2 configurée pour prélever de l'air chaud au niveau du moteur 62,
- un conduit de sortie d'air chaud 92 qui présente une première extrémité 92.1 reliée à la première sortie 84 ainsi qu'une deuxième extrémité 92.2 configurée pour acheminer de l'air chaud en direction d'au moins un équipement de l'aéronef,
- un conduit d'alimentation en air froid 94 qui présente une première extrémité 94.1 reliée à la deuxième entrée 86 ainsi qu'une deuxième extrémité 94.2 comportant au moins une bouche 96 configurée pour prélever de l'airfroid dans le flux secondaire 70,
- un conduit d'échappement 98 qui présente une première extrémité 98.1 reliée à la deuxième sortie 88 ainsi qu'une deuxième extrémité 98.2 configurée pour rejeter l'air à l'extérieur de l'aéronef.

Les premier et deuxième circuits de l'échangeur thermique 80 sont configurés pour assurer des échanges thermiques entre l'air chaud circulant dans le premier circuit et l'air froid circulant dans le deuxième circuit.

Le premier conduit d'alimentation en air chaud 90 traverse la structure primaire 74 du mât 72.

Selon une particularité, la bouche 96 du conduit d'alimentation en air froid 94 est positionnée au niveau du bord d'attaque 76.1 de la première bifurcation 76 positionnée dans un plan sensiblement vertical et au-dessus du moteur 62. Comme illustré sur la figure 5, la bouche 96 est positionnée approximativement à équidistance du moteur 62 et de la nacelle 66, au milieu du conduit annulaire 68.

Le positionnement de la bouche 96 au niveau du bord d'attaque 76.1 de la bifurcation 76 favorise l'introduction de l'air dans le conduit d'alimentation en air froid 94 et réduit les perturbations causées par le dispositif d'échange thermique 78 sur le flux secondaire 70.

Selon une configuration, le conduit d'alimentation en air froid 94 comprend une vanne 100 configurée pour réguler le flux d'air froid transmis à l'échangeur thermique 80.

Selon une configuration, le conduit d'alimentation en air froid 94 comprend des premier et deuxième tronçons 101 et 101', le premier tronçon 101 comportant une première extrémité reliée à la bouche 96 ainsi qu'une deuxième extrémité, le deuxième tronçon 101' comportant une première extrémité reliée à la deuxième entrée 86 de l'échangeur thermique 80 ainsi qu'une deuxième extrémité, les deuxièmes extrémités des premier et deuxième tronçons 101, 101' étant emmanchées l'une dans l'autre et coulissant l'une par rapport à l'autre. Un joint d'étanchéité est intercalé entre les deuxièmes extrémités des premier et deuxième tronçons 101, 101'.

Selon une particularité, l'échangeur thermique 80 est un échangeur à plaques comportant une pluralité de plaques 102 parallèles entre elles et espacées, séparant l'air chaud et l'air froid, l'air chaud et l'air froid circulant de manière alternée entre les plaques 102. L'échangeur thermique 80 comprend un premier circuit, dans lequel circule l'air chaud, comprenant des premières zones interplaques ainsi qu'un deuxième circuit, dans lequel circule l'air froid, comprenant des deuxièmes zones interplaques intercalées entre les premières zones interplaques. Ainsi, l'air chaud circule entre les première et deuxième plaques, entre les troisième et quatrième plaques, entre les cinquième et sixième plaques et ainsi de suite alors que l'air froid circule entre les deuxième et troisième plaques, entre les quatrième et cinquième plaques, entre les sixième et septième plaques et ainsi de suite.

Selon une configuration, les premier et deuxième circuits de l'échangeur thermique 80 sont agencés de manière à obtenir un échangeur à contre-courant, l'air chaud et l'air froid circulant parallèlement de part et d'autres des plaques 102 mais dans des sens opposés, notamment dans la partie centrale de l'échangeur thermique 80. Cette configuration permet d'obtenir un échangeur thermique plus efficace pour un encombrement donné.

L'échangeur thermique 80 comprend une première nourrisse 82.1 configurée pour faire communiquer la première entrée 82 avec les premières zones interplaques, un premier collecteur 84.1 configuré pour faire communiquer les premières zones interplaques avec la première sortie 84, une deuxième nourrisse 86.1 configurée pour faire communiquer la deuxième entrée 86 avec les deuxièmes zones interplaques ainsi qu'un deuxième collecteur 88.1 configuré pour faire communiquer les deuxièmes zones interplaques avec la deuxième sortie 88.

Les plaques 102 de l'échangeur thermique 80 sont positionnées dans des plans longitudinaux verticaux.

L'échangeur thermique 80 présente quatre faces latérales, parallèles deux à deux, dont une face latérale supérieure 104, une face latérale inférieure 104' parallèle à la face latérale supérieure 104, une face latérale droite 106 ainsi qu'une face latérale gauche 106' parallèle à la face latérale droite 106.

Les faces latérales supérieure et inférieure 104, 104' sont perpendiculaires aux faces latérales droite et gauche 106, 106'. Ainsi, l'échangeur thermique 80 présente dans des plans transversaux (perpendiculaires aux faces latérales 104, 104', 106, 106') une section carrée ou rectangulaire.

Selon une particularité de l'invention, l'échangeur thermique 80 présente dans des plans longitudinaux parallèles aux plaques 102 une section longitudinale hexagonale. Ainsi, l'échangeur thermique 80 présente, à une première extrémité, une première face d'extrémité supérieure 108 et une première face d'extrémité inférieure 108' ainsi qu'à une deuxième extrémité, une deuxième face d'extrémité supérieure 110 et une deuxième face d'extrémité inférieure 110'.

Les première et deuxième faces d'extrémité supérieures 108, 110 sont adjacentes à la face latérale supérieure 104 et positionnées de part et d'autre de ladite face latérale supérieure 104. Les première et deuxième faces d'extrémité inférieures 108', 110' sont adjacentes à la face latérale inférieure 104' et positionnées de part et d'autre de ladite face latérale inférieure 104'.

Les premières et deuxièmes faces d'extrémité supérieures et inférieures 108, 108', 110, 110' sont sensiblement perpendiculaires aux faces latérales droite et gauche 106, 106'.

Les premières faces d'extrémité supérieure et inférieure 108, 108' forment entre elles un angle compris entre 60 et 150°. En parallèle, les deuxièmes faces d'extrémité supérieure et inférieure 110, 110' forment entre elles un angle compris entre 60 et 150°.

Selon une configuration, la première entrée 82 et la première nourrisse 82.1 sont positionnées sur la deuxième face d'extrémité inférieure 110', la première sortie 84 et le premier collecteur 84.1 sont positionnés sur la première face d'extrémité supérieure 108, la deuxième entrée 86 et la deuxième nourrisse 86.1 sont positionnées sur la première face d'extrémité inférieure 108', la deuxième sortie 88 et le deuxième collecteur 88.1 sont positionnés sur la deuxième face d'extrémité supérieure 110.

Le fait de prévoir un échangeur thermique avec une section longitudinale hexagonale permet d'obtenir un dispositif d'échange thermique 78 plus compact. Ainsi, contrairement à l'art antérieur, le conduit d'alimentation en air froid 94 et le conduit de sortie d'air chaud 92 ne forment pas en sortie de l'échangeur thermique 80 un angle d'environ 90° mais inférieur à 90°, de l'ordre de 60°. De même, le conduit d'alimentation en air chaud 90 et le conduit d'échappement 98 ne forment pas en sortie de l'échangeur thermique 80 un angle d'environ 90° mais inférieur à 90°, de l'ordre de 60°. Ainsi, les faces latérales supérieure, inférieure, droite et gauche 104, 104', 106, 106' sont dégagées.

Grâce à cette compacité, l'échangeur thermique 80 est positionné dans la première bifurcation 76, sa face latérale inférieure 104' étant plaquée contre la structure primaire 74. Cet agencement permet de ne pas plus encombrer l'intérieur de la structure primaire et la zone située entre les conduits extérieur et intérieur de la nacelle 66, au-dessus du conduit annulaire.

## Revendications

1. Ensemble de propulsion d'aéronef comportant un moteur (62), une nacelle (66) positionnée autour du moteur (62), un conduit annulaire (68) délimité par le moteur (62) et la nacelle (66) dans laquelle s'écoule un flux secondaire (70) d'air froid, au moins une bifurcation (76) reliant le moteur (62) et la nacelle (66) et comportant un bord d'attaque (76.1) ainsi qu'une structure primaire (74) d'un mât logé dans la bifurcation (76) et configuré pour relier le moteur (62) à une aile d'aéronef, l'ensemble de propulsion comportant au moins un dispositif d'échange thermique (78) qui comprend :
- un échangeur thermique (80) qui présente un premier circuit d'air chaud reliant une première entrée (82) et une première sortie (84) ainsi qu'un deuxième circuit d'air froid reliant une deuxième entrée (86) et une deuxième sortie (88),
- un conduit d'alimentation en air chaud (90) relié à la première entrée (82) et configuré pour prélever de l'air chaud au niveau du moteur (62),
- un conduit de sortie d'air chaud (92) relié à la première sortie (84) et configuré pour acheminer de l'air chaud en direction d'au moins un équipement de l'aéronef,
- un conduit d'alimentation en air froid (94) relié à la deuxième entrée (86) et configuré pour prélever de l'air froid dans le flux secondaire (70),
- un conduit d'échappement (98) relié à la deuxième sortie (88) et configuré pour rejeter l'air à l'extérieur de l'aéronef, et
**caractérisé en ce que** l'échangeur thermique (80) est un échangeur à plaques, présentant une section longitudinale hexagonale et positionné dans la bifurcation (76).

2. Ensemble de propulsion selon la revendication précédente, **caractérisé en ce que** l'échangeur thermique (80) comprend des plaques (102) positionnées dans des plans longitudinaux verticaux.

3. Ensemble de propulsion selon l'une des revendications précédentes, **caractérisé en ce que** le conduit d'alimentation en air froid (94) présente au moins une bouche (96) configurée pour prélever de l'air froid dans le flux secondaire (70) et positionnée au niveau du bord d'attaque (76.1) de la bifurcation (76).

4. Ensemble de propulsion selon la revendication précédente, **caractérisé en ce que** la bouche (96) est positionnée approximativement au milieu du conduit annulaire (68).

5. Ensemble de propulsion selon la revendication 3 ou 4, **caractérisé en ce que** le conduit d'alimentation en air froid (94) comprend des premier et deuxième tronçons (101, 101'), le premier tronçon (101) comportant une première extrémité reliée à la bouche (96) ainsi qu'une deuxième extrémité, le deuxième tronçon (101') comportant une première extrémité reliée à la deuxième entrée (86) de l'échangeur thermique (80) ainsi qu'une deuxième extrémité, les deuxièmes extrémités des premier et deuxième tronçons (101, 101') étant emmanchées l'une dans l'autre et coulissant l'une par rapport à l'autre.

6. Ensemble de propulsion selon l'une des revendications précédentes, **caractérisé en ce que** l'échangeur thermique (80) comprend des faces latérales supérieure et inférieure (104, 104') parallèles entre elles, des faces latérales droite et gauche (106, 106') parallèles entre elles et perpendiculaires aux faces latérales supérieure et inférieure (104, 104'), des premières face d'extrémité supérieure et inférieure (108, 108') perpendiculaires aux faces latérales droite et gauche (106, 106') ainsi que des deuxième faces d'extrémité supérieure et inférieure (110, 110') perpendiculaires aux faces latérales droite et gauche (106, 106') ; les première et deuxième faces d'extrémité supérieures (108, 110) étant adjacentes à la face latérale supérieure (104) et positionnées de part et d'autre de ladite face latérale supérieure (104), les première et deuxième faces d'extrémité inférieures (108', 110') étant adjacentes à la face latérale inférieure (104') et positionnées de part et d'autre de ladite face latérale inférieure (104').

7. Ensemble de propulsion selon la revendication précédente, **caractérisé en ce que** les premières faces d'extrémité supérieure et inférieure (108, 108') forment entre elles un angle compris entre 60 et 150° et **en ce que** les deuxièmes faces d'extrémité supérieure et inférieure (110, 110') forment entre elles un angle compris entre 60 et 150°.

8. Ensemble de propulsion selon l'une des revendications 6 à 7, **caractérisé en ce que** la première entrée (82) est positionnée sur la deuxième face d'extrémité inférieure (110'), **en ce que** la première sortie (84) est positionnée sur la première face d'extrémité supérieure (108), **en ce que** la deuxième entrée (86) est positionnée sur la première face d'extrémité inférieure (108') et **en ce que** la deuxième sortie (88) est positionnée sur la deuxième face d'extrémité supérieure (110).

9. Ensemble de propulsion selon l'une des revendications 6 à 8, **caractérisé en ce que** la face latérale inférieure (104') de l'échangeur thermique (80) est plaquée contre la structure primaire (74).

10. Ensemble de propulsion selon l'une des revendications précédentes, **caractérisé en ce que** l'échangeur thermique (80) est un échangeur thermique à contre-courant.

11. Aéronef comprenant au moins un ensemble de propulsion selon l'une des revendications précédentes.

## Patentansprüche

1. Luftfahrzeugantriebsbaugruppe, umfassend ein Triebwerk (62), eine um das Triebwerk (62) herum positionierte Gondel (66), einen von dem Triebwerk (62) und der Gondel (66) begrenzten ringförmigen Kanal (68), in dem ein Sekundärstrom (70) kalter Luft strömt, mindestens eine Verzweigung (76), die das Triebwerk (62) und die Gondel (66) verbindet und eine Vorderkante (76.1) sowie eine Primärstruktur (74) eines Masts umfasst, die in der Verzweigung (76) untergebracht und ausgelegt ist, das Triebwerk (62) mit einem Luftfahrzeugflügel zu verbinden, wobei die Antriebsbaugruppe mindestens eine Wärmeaustauschvorrichtung (78) umfasst, die aufweist:
- einen Wärmetauscher (80), der einen ersten Heißluftkreis aufweist, der einen ersten Einlass (82) mit einem ersten Auslass (84) verbindet, sowie einen zweiten Kaltluftkreis, der einen zweiten Einlass (86) mit einem zweiten Auslass (88) verbindet,
- einen Heißluftzufuhrkanal (90), der mit dem ersten Einlass (82) verbunden und ausgelegt ist, Heißluft im Bereich des Triebwerks (62) zu entnehmen,
- einen Heißluftauslasskanal (92), der mit dem ersten Auslass (84) verbunden und ausgelegt ist, Heißluft zu mindestens einer Ausrüstung des Luftfahrzeugs weiterzuleiten, einen Kaltluftzufuhrkanal (94), der mit dem zweiten Einlass (86) verbunden und ausgelegt ist, Kaltluft aus dem Sekundärstrom (70) zu entnehmen,
- einen Auslasskanal (98), der mit dem zweiten Auslass (88) verbunden und ausgelegt ist, die Luft aus dem Luftfahrzeug auszustoßen, und
**dadurch gekennzeichnet, dass** der Wärmetauscher (80) ein Plattenwärmetauscher ist, der einen sechseckigen Längsquerschnitt aufweist und in der Verzweigung (76) positioniert ist.

2. Antriebsbaugruppe nach dem vorhergehenden Anspruch, **dadurch gekennzeichnet, dass** der Wärmetauscher (80) in vertikalen Längsebenen positionierte Platten (102) aufweist.

3. Antriebsbaugruppe nach einem der vorhergehenden Ansprüche, **dadurch gekennzeichnet, dass** der Kaltluftzufuhrkanal (94) mindestens eine Mündung (96) aufweist, die ausgebildet ist, Kaltluft aus dem Sekundärstrom (70) zu entnehmen, und an der Vorderkante (76.1) der Verzweigung (76) positioniert ist.

4. Antriebsbaugruppe nach dem vorhergehenden Anspruch, **dadurch gekennzeichnet, dass** die Mündung (96) etwa in der Mitte des ringförmigen Kanals (68) positioniert ist.

5. Antriebsbaugruppe nach Anspruch 3 oder 4, **dadurch gekennzeichnet, dass** der Kaltluftzufuhrkanal (94) einen ersten und zweiten Abschnitt (101, 101') aufweist, wobei der erste Abschnitt (101) ein mit der Mündung (96) verbundenes erstes Ende sowie ein zweites Ende umfasst, wobei der zweite Abschnitt (101') ein mit dem zweiten Einlass (86) des Wärmetauschers (80) verbundenes erstes Ende sowie ein zweites Ende umfasst, wobei die zweiten Enden des ersten und zweiten Abschnitts (101, 101') ineinandergesteckt und relativ zueinander verschiebbar sind.

6. Antriebsbaugruppe nach einem der vorhergehenden Ansprüche, **dadurch gekennzeichnet, dass** der Wärmetauscher (80) obere und untere Seitenflächen (104, 104') parallel zueinander, rechte und linke Seitenflächen (106, 106') parallel zueinander und senkrecht zu den oberen und unteren Seitenflächen (104, 104'), erste obere und untere Endflächen (108, 108') senkrecht zu den rechten und linken Seitenflächen (106, 106') sowie zweite obere und untere Endflächen (110, 110') senkrecht zu den rechten und linken Seitenflächen (106, 106') aufweist; wobei die erste und zweite obere Endfläche (108, 110) an die obere Seitenfläche (104) angrenzen und beiderseits der oberen Seitenfläche (104) positioniert sind, wobei die erste und zweite untere Endfläche (108', 110') an die untere Seitenfläche (104') angrenzen und beiderseits der unteren Seitenfläche (104') positioniert sind.

7. Antriebsbaugruppe nach dem vorhergehenden Anspruch, **dadurch gekennzeichnet, dass** die erste obere und untere Endfläche (108, 108') zwischen sich einen Winkel zwischen 60 und 150° bilden und dass die zweite obere und untere Endfläche (110, 110') zwischen sich einen Winkel zwischen 60 und 150° bilden.

8. Antriebsbaugruppe nach einem der Ansprüche 6 bis 7, **dadurch gekennzeichnet, dass** der erste Einlass (82) an der zweiten unteren Endfläche (110') positioniert ist, dass der erste Auslass (84) an der ersten oberen Endfläche (108) positioniert ist, dass der zweite Einlass (86) an der ersten unteren Endfläche (108') positioniert ist und dass der zweite Auslass (88) an der zweiten oberen Endfläche (110) positioniert ist.

9. Antriebsbaugruppe nach einem der Ansprüche 6 bis 8, **dadurch gekennzeichnet, dass** die untere Seitenfläche (104') des Wärmetauschers (80) gegen die Primärstruktur (74) gepresst ist.

10. Antriebsbaugruppe nach einem der vorhergehenden Ansprüche, **dadurch gekennzeichnet, dass** der Wärmetauscher (80) ein Gegenstrom-Wärmetauscher ist.

11. Luftfahrzeug, aufweisend mindestens eine Antriebsbaugruppe nach einem der vorhergehenden Ansprüche.

## Claims

1. Aircraft propulsion assembly having an engine (62), a nacelle (66) positioned around the engine (62), an annular duct (68) delimited by the engine (62) and the nacelle (66) in which flows a bypass flow (70) of cold air, at least one bifurcation (76) connecting the engine (62) and the nacelle (66) and having a leading edge (76.1) and a primary structure (74) of a pylon housed in the bifurcation (76) and configured to connect the engine (62) to an aircraft wing, the propulsion assembly having at least one heat exchange device (78) which comprises:
- a heat exchanger (80) which has a first hot air circuit connecting a first inlet (82) and a first outlet (84), and a second cold air circuit connecting a second inlet (86) and a second outlet (88),
- a hot air supply duct (90) connected to the first inlet (82) and configured to take hot air from the engine (62),
- a hot air outlet duct (92) connected to the first outlet (84) and configured to convey hot air towards at least one item of aircraft equipment,
- a cold air supply duct (94) connected to the second inlet (86) and configured to take cold air from the bypass flow (70),
- an exhaust duct (98) connected to the second outlet (88) and configured to expel the air out of the aircraft, and
**characterized in that** the heat exchanger (80) is a plate heat exchanger, having a hexagonal longitudinal section and positioned in the bifurcation (76).

2. Propulsion assembly according to the preceding claim, **characterized in that** the heat exchanger (80) comprises plates (102) positioned in vertical longitudinal planes.

3. Propulsion assembly according to either of the preceding claims, **characterized in that** the cold air supply duct (94) has at least one opening (96) configured to take cold air from the bypass flow (70) and positioned in the leading edge (76.1) of the bifurcation (76).

4. Propulsion assembly according to the preceding claim, **characterized in that** the opening (96) is positioned approximately in the middle of the annular duct (68).

5. Propulsion assembly according to Claim 3 or 4, **characterized in that** the cold air supply duct (94) comprises first and second portions (101, 101'), the first portion (101) having a first end connected to the opening (96) and a second end, the second portion (101') having a first end connected to the second inlet (86) of the heat exchanger (80) and a second end, the second ends of the first and second portions (101, 101') being fitted one inside the other and being able to slide with respect to one another.

6. Propulsion assembly according to one of the preceding claims, **characterized in that** the heat exchanger (80) comprises mutually parallel upper and lower lateral faces (104, 104'), mutually parallel right-hand and left-hand lateral faces (106, 106') perpendicular to the upper and lower lateral faces (104, 104'), first upper and lower end faces (108, 108') perpendicular to the right-hand and left-hand lateral faces (106, 106'), and second upper and lower end faces (110, 110') perpendicular to the right-hand and left-hand lateral faces (106, 106'); the first and second upper end faces (108, 110) being adjacent to the upper lateral face (104) and positioned on either side of said upper lateral face (104), the first and second lower end faces (108', 110') being adjacent to the lower lateral face (104') and positioned on either side of said lower lateral face (104') .

7. Propulsion assembly according to the preceding claim, **characterized in that** the first upper and lower end faces (108, 108') form an angle of between 60° and 150° between them, and **in that** the second upper and lower end faces (110, 110') form an angle of between 60° and 150° between them.

8. Propulsion assembly according to either of Claims 6 and 7, **characterized in that** the first inlet (82) is positioned on the second lower end face (110'), **in that** the first outlet (84) is positioned on the first upper end face (108), **in that** the second inlet (86) is positioned on the first lower end face (108'), and **in that** the second outlet (88) is positioned on the second upper end face (110).

9. Propulsion assembly according to one of Claims 6 to 8, **characterized in that** the lower lateral face (104') of the heat exchanger (80) is pressed against the primary structure (74) .

10. Propulsion assembly according to one of the preceding claims, **characterized in that** the heat exchanger (80) is a countercurrent heat exchanger.

11. Aircraft comprising at least one propulsion assembly according to one of the preceding claims.
